Europäisches Patentamt

European Patent Office

Office européen des brevets

(11) Veröffentlichungsnummer: **0 337 224**
**A1**

(12) EUROPÄISCHE PATENTANMELDUNG

(21) Anmeldenummer: 89105771.3

(22) Anmeldetag: 01.04.89

(51) Int. Cl.⁴: **C08K 5/03 , C08K 5/32 , C09J 3/12**

(30) Priorität: 08.04.88 DE 3811803

(43) Veröffentlichungstag der Anmeldung:
18.10.89 Patentblatt 89/42

(84) Benannte Vertragsstaaten:
**AT BE CH DE ES FR GB IT LI NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Wüst, Willi, Dr.**
**Fasanenring 32**
**D-4030 Ratingen(DE)**
Erfinder: **Beiersdorf, Wolf-Dieter, Dr.**
**Am Dammsteg 68**
**D-4000 Düsseldorf(DE)**

(54) Gummimetallbindemittel.

(57) Bei einem Mittel zum Aufvulkanisieren von Gummi auf Metalle, enthaltend metallbindende Polymere, Dinitrosobenzol, organische Lösungsmittel und gewünschtenfalls weitere Komponenten wie Säurefänger, verstärkende Füllstoffe sollte die Vorheizbeständigkeit und die Hochtemperaturbeständigkeit beim Aufvulkanisieren verbessert werden. Dies gelang dadurch, daß die metallbindenden Polymere anteilsmäßig durch solche aromatische Verbindungen ersetzt sind, die zwei oder mehrere Reste der Formel -CH₂Br tragen.

EP 0 337 224 A1

# Gummimetallbindemittel

Die Erfindung betrifft ein Bindemittel zum Aufvulkanisieren von Kautschukmischungen auf Metalle. Gummimetallverbunde sind in vielen Gebieten der Technik von großer Bedeutung. Dabei ist es bekannt, zum Erhalt der geforderten Hafteigenschaft die Kautschukmischungen unter erhöhten Temperaturen auf das Metallteil aufzuvulkanisieren.

In der US-Patentschrift 2,900,292 wird ein bekanntes Gummimetallbindemittel beschrieben. Dieses Mittel enthält metallbindende Polymerverbindung, u.a. bromiertes Poly-2,3-dichlorbutadien-1,3 (bromiertes PDCB), gewünschtenfalls weitere metallbindende Polymere und die in solchen Mischungen üblichen Hilfsstoffe.

Vor dem Hintergrund dieses Standes der Technik haben sich die Erfinder die Aufgabe gestellt, die Vorheizbeständigkeit und die Hochtemperaturbeständigkeit von Bindemitteln zum Aufvulkanisieren von Gummi auf Metalle zu verbessern.

Unter Vorheizbeständigkeit ist dabei zu verstehen, daß Bindemittel so eingestellt werden, daß bei der Beschickung mehrkalibriger Formen mit Teilen, die das Bindemittel auf ihrer Oberfläche enthalten, keine vorzeitige Abreaktion an den zuerst in die mehrkalibrige Form eingefügten Bauteilen stattfindet. Unter Hochtemperaturbeständigkeit wird hier verstanden, daß die Vulkanisation bei höheren Temperaturen durchgeführt werden kann. Der Begriff bezieht sich nicht auf die Bindefestigkeit beim Erhitzen der Verbunde.

Gegenstand der Erfindung ist somit ein Mittel zum Aufvulkanisieren von Gummi auf Metalle, enthaltend
- metallbindende Polymere
- Dinitrosobenzol oder dessen Homologe
- organische Lösungsmittel und gewünschtenfalls weitere Komponenten wie
- Säurefänger
- verstärkende Füllstoffe
dadurch gekennzeichnet, daß die metallbindende Polymere anteilsmäßig durch solche aromatische Verbindungen ersetzt sind, die zwei oder mehrere Reste der Formel -$CH_2Br$ tragen.

Die erfindungsgemäßen Bindemittel können mit Vorteil die folgende Zusammensetzung aufweisen:

| | | |
|---|---|---|
| 0,2 - 2,5 | Gew.-% | aromatische Verbindungen mit 2 oder mehr Resten - $CH_2Br$ |
| 5 - 25 | Gew.-% | metallbindende Polymere |
| 0,2 - 5 | Gew.-% | Dinitrosobenzol |
| 0,2 - 10 | Gew.-% | Säurefänger |
| 0,1 - 10 | Gew.-% | verstärkende Füllstoffe und |
| 70 - 90 | Gew.-% | organische Lösungsmittel. |

Wichtiger Bestandteil der Bindemittel ist somit die metallbindende Komponente. Es handelt sich dabei um halogenierte Polymere. Ein bevorzugtes Polymer ist bromiertes PDCB, wobei PDCB alleine als Polymer eingesetzt werden kann. Unter den theoretisch denkbaren und bekannten Bromierungsprodukten von PDCB sind solche Produkte bevorzugt, die durch radikalische Bromierung unter Bedingungen gewonnen wurden, bei denen die Bromatome in Allylstellung zu den vorhandenen Doppelbindungen eingebaut werden. Ein Verfahren zur Herstellung solcher Produkte ist im US-Patent 2,725,373 beschrieben. Der Bromierungsgrad soll 5 bis 32 Gew.-%, entsprechend 7,5 bis 42 mol-% betragen. Als Ausgangsstoff für die Bromierung wird vorzugsweise ein durch radikalische Polymerisation hergestelltes PDCB eingesetzt, wobei Produkte, die bei tieferen Temperaturen polymerisiert worden sind, Vorteile aufweisen können. Geeignetes PDCB braucht nicht filmbildend bei Raumtemperatur zu sein, jedoch sind die Bromierungsprodukte filmbildende Polymere.

In vielen Fällen kann es jedoch bevorzugt sein, bromiertes PDCB in Abmischung mit anderen Polymeren, insbesondere mit halogenierten Polymeren einzusetzen. So kann bromiertes PDCB zusammen mit chloriertem EPDM oder auch mit chlorsulfonierten Polyethylen, soweit es die Lagerstabilität der Mischungen zuläßt, eingesetzt werden. Ganz besonders bevorzugt ist eine Mischung aus bromiertem PDCB und Chlorkautschuk.

Als weitere metallbindende Polymere können auch noch eine Vielzahl anderer Polymerer eingesetzt werden, die beispielsweise in der zuvor genannten US-Patentschrift 2,900,292 genannt sind. So können wärmevernetzende Phenolharze oder Epoxidharze, wärmevernetzende Polyester, wärmevernetzende Triazinharze und Copolymer von polaren ethylenisch ungesättigten Verbindungen eingesetzt werden. Copolymere von polaren ethylenisch ungesättigten Verbindungen sind Copolymere von beispielsweise Polyvinylbutyral, Polyvinylformal, Polyvinylacetat, chloriertem Polyvinylchlorid und dergleichen, auch Copolymere von Vinylacetat und Vinylchlorid, chlorierte Copolymere von Vinylacetat und Vinylchlorid, Polymere von Acrylsäure, Copolymere von Acrylsäure und konjugierten Dienen, wie Butadien-1,3, 2-Chlorobutadien-1,3, 2,3-Dichlorbutadien-1,3 können eingesetzt werden, desgleichen nachhalogenierte Produkte dieser Ausgangspolymer. Weiter geeignet sind weitere chlorierte Kautschuke, wie beispielsweise chlorierte synthetische Kautschuke, so chloriertes Polybutadien, chlorierte Copolymere aus Butadien und Styrol und Mischungen von chlorierten Kautschuken oder hypohalogenierten Kautschuken und dergleichen. Mitverwendet werden können auch zahlreiche Polyisocyanate und deren Addukte an Epoxidharze.

Bevorzugt sind als metallbindende Polymere Mischungen von bromierten PDCB mit halogenierten Kautschuken, insbesondere chloriertem Naturkautschuk. Vorzugsweise beträgt der Anteil des bromierten PDCB an der Gesamtmenge der metallbindenden Polymere 15 bis 35 Gew.-%.

Die erfindungsgemäßen Mittel zum Aufvulkanisieren von Kautschuk auf Metalle enthalten als kennzeichnende Komponente eine aromatische Verbindung mit zwei oder mehr als zwei Resten der Formel -CH$_2$Br. Vorzugsweise wird diese Verbindung zusammen mit dem bromierten PDCB eingesetzt. Dabei hat es sich gezeigt, daß mit Vorteil 5 bis 25 % der Gewichtsmenge des bromierten PDCB durch die aromatischen Verbindungen ersetzen werden können. Als geeignete aromatische Verbindungen mit zwei oder mehr Resten der Formel -CH$_2$Br eignen sich beispielsweise die verschiedenen isomeren, in den Seitenketten bromierten Xylole dieser Struktur.

In der Praxis hat es sich gezeigt, daß ein Produkt, das bei der radikalisch verlaufenden Photobromierung von technischem Xylol zu einer Verbindung mit 2 Brom-Atomen im Xylolmolekül erhalten werden kann, besonders geeignet ist. Technisches Xylol enthält meist 19 % ortho-Xylol, 44 % meta-Xylol, 18 % para-Xylol und etwa 18 % Ethylbenzol. Bei der Photobromierung, die vorzugsweise unter Bestrahlung mit sichtbarem Licht bei Temperaturen zwischen 70 und 80° in einem Lösungsmittel wie Tetrachlorkohlenstoff durchgeführt wird, entstehen Produkte, die die geforderten -CH$_2$Br-Gruppen enthalten. Es hat sich gezeigt, daß kernbromierte Xylole und teilweise kernbromierte Xylole für die Zwecke der Erfindung wenig geeignet sind.

Die erfindungsgemäßen Gummimetallbindemittel enthalten als weiteren Bestandteil Dinitrosobenzol oder dessen Homologe. Unter Homologen werden hier ganz allgemein aromatische Dinitrosoverbindungen verstanden, die sich von aromatischen Kohlenwasserstoffen, wie Benzol, Naphthalin, Anthracen oder Biphenyl ableiten können und wenigstens zwei Nitrosogruppen, die direkt an Ringkohlenstoffatome gebunden sind, welche vorzugsweise einander nicht benachbart sind, enthalten. Derartige Nitrosoverbindungen werden beispielsweise in der deutschen Patentanmeldung 34 25 381 beschrieben. Diese Verbindungen wirken als Vernetzer. Sie können in bekannter Weise durch solche Verbindungen ersetzt werden, die unter Vulkanisationsbedingungen über die Zwischenstufe des Dinitrosobenzols weiterreagieren.

Die erfindungsgemäßen Gummimetallbindemittel können weitere in derartigen Mischungen bekannte Stoffe enthalten. So können beispielsweise Säurefänger miteingesetzt werden. Ein bekannter Säurefänger ist basisches Bleiphosphit.

Die erfindungsgemäßen Gummimetallbindemittel können desweiteren Füllstoffe enthalten, die zur Färbung, Streckung und Verstärkung dienen. Ein besonders geeigneter Füllstoff ist Ruß.

Der Fachmann wird die erfindungsgemäßen Gummimetallbindemittel in ihrer Viskosität so einstellen, daß sie leicht verarbeitet werden können. Dazu ist es bevorzugt, die einzelnen Stoffe in organischen Lösungsmitteln zu lösen. Als organische Lösungsmittel kommen hier aprotische Lösungsmittel in Frage, insbesondere chlorierte Kohlenwasserstoffe und/oder aromatische Kohlenwasserstoffe. So können Perchlorethylen oder Trichlorethylen, Xylol oder Toluol alleine oder in Abmischung als Lösungsmittel eingesetzt werden.

**Beispiele**

Mischungen (in Teile)

1. Naturkautschuk

100     Naturkautschuk
10     Zinkoxid
2     Stearinsäure
1     Phenylbetanaphtylamin
2     Fichtenteer
25     Ruß HAF N 356
0.33     Zink-Dimethyldithiocarbamat
0.58     Mercaptobenzothiazoldisulfid
2.75     Schwefel

2. Styrol-Butadien-Kautschuk

100     SBR-Kautschuk
5     Zinkoxid
1     Stearinsäure
50     Ruß (Corax A)
1     N-Cyclohexyl-2-Benzothiazylsulfenamid
1.5     Schwefel

3. Chlorbutadien-Kautschuk

100     CR-Kautschuk
2     Stearinsäure
1.5     Phenylbetanaphtylamin
100     Thermalruß N 990
70     Kreide gecoated
20     Bleimennige
1.5     Ozonschutzwachs
20     napht. Weichmacher
1     Tetramethylthiurammonosulfid

## 4. Acrylnitril-Butadien-Kautschuk

| | |
|---|---|
| 100 | NBR-Kautschuk |
| 5 | Zinkoxid |
| 1 | Stearinsäure |
| 80 | Furnaceruß |
| 15 | Dioctylphtalat |
| 1 | Tetramethylthiurammonosulfid |
| 0.2 | Diphenylguanidin |
| 1.5 | Schwefel |

**Probekörperherstellung**

Blechproben aus kaltgewalztem Stahl wurden mit 1.1.1. Trichlorethandampf entfettet, mit Hartgußkies gestrahlt und erneut mit 1,1,1-Trichlorethandampf behandelt.

Anschließend wurden die Bleche mit ca. 10 μ (Trockenschichtstärke) eines Haftprimers auf Phenolharzbasis und ca. 20 μ der beschriebenen Haftmittel beschichtet.

Nach dem Trocknen wurden die Bleche in der Presse unter einem Druck von ca. 50 MPa unter den entsprechenden Vulkanisationsbedingungen an die Kautschukmischungen gebunden, so daß ein Schälprüfkörper gemäß ASTM D 429 B entstand.

Nach 24stündiger Lagerung der Prüfkörper bei Raumtemperatur wurde die Gummiauflage abgeschält. Bestimmt wurden dabei die Haftfestigkeit und das Reißbild. Das Reißbild wurde folgendermaßen beurteilt: Die Zahl drückt den Anteil Elastomerbruch in % aus, wobei bei Bruch zwischen Elastomer und Bindemittel RC (Rubber-Cement) , bei Bruch zwischen Primer und Bindemittel CP (Cement-Primer) und Ablösung vom Metall M (Metal) angegeben wird.

Zur Bestimmung der Vorheizbeständigkeit wurden die mit Primer und Haftmittel beschichteten Bleche verschieden lang in die heiße Vulkanisationsform eingelegt. Danach wurde das Elastomer wie beschrieben aufvulkanisiert.

Zur Bestimmung der Hochtemperatur-Bindefähigkeit wurden die beschichteten Bleche in die heiße Form eingelegt und sofort wie beschrieben mit Elastomer zusammenvulkanisiert.

| Bindemittelrezepturen (Gew.-%) | | | | |
|---|---|---|---|---|
| | BM 0 | BM 1 | BM 2 | BM 3 |
| Chlorkautschuk | 14.5 | 14.5 | 14.5 | 14.5 |
| nachbromeirtes PDCB (100 %ig) als 30 - 40 %ige Lsg. in Xylol | 6.2 | 5.6 | 5.0 | 4.7 |
| bromiertes techn. Xylol | - | 0.6 | 1.2 | 1.5 |
| Dinitrosobenzol (100 %ig) als 30 - 35 %ige Suspension in Xylol | 2.1 | 2.1 | 2.1 | 2.1 |
| dibasisches Bleiphosphit | 1.1 | 1.1 | 1.1 | 1.1 |
| Furnace-Ruß N 762 | 2.1 | 2.1 | 2.1 | 2.1 |
| Perchlorethylen | 12.0 | 12.0 | 12.0 | 12.0 |
| Xylol | 62.0 | 62.0 | 62.0 | 62.0 |

Tabelle:

| Hochtemperaturbindung Vulkanisation: 5', 190 °C | | | | |
|---|---|---|---|---|
| | BM 0 | BM 1 | BM 2 | BM 3 |
| SBR | 40R/RC | 100R | 100R | 100R |
| NBR | 60R/RC | 100R | 100R | 100R |
| CR | 80R/RC | 100R | 100R | 100R |

Tabelle:

| Vorheizbeständigkeit (min bei 153 °C) | | | | | |
|---|---|---|---|---|---|
| NR | 10' | 100R | 100R | 100R | 100R |
| | 12' | 60R/RC | 100R | 90R/RC | 70R/RC |
| | 14' | 10R/RC | 80R | 60R/RC | 40R/RC |

Tabelle:

| Kochendwassertest 95 °C, 2 h, 2 kg/inch. Belastung | | | | |
|---|---|---|---|---|
| SBR | 100R | 100R | 100R | 100R |

## Ansprüche

1. Mittel zum Aufvulkanisieren von Gummi auf Metalle, enthaltend
- metallbindende Polymere
- Dinitrosobenzol oder dessen Homologe
- organische Lösungsmittel und gewünschtenfalls weitere Komponenten wie
- Säurefänger
- verstärkende Füllstoffe
dadurch gekennzeichnet, daß die metallbindende Polymere anteilsmäßig durch solche aromatische Verbindungen ersetzt sind, die zwei oder mehrere Reste der Formel -CH$_2$Br tragen.

2. Bindemittel nach Anspruch 1, dadurch gekennzeichnet, daß sie enthalten

| 0,2 - 2,5 | Gew.-% | aromatische Verbindungen mit 2 oder mehr Resten - CH$_2$Br |
|---|---|---|
| 5 - 25 | Gew.-% | metallbindende Polymere |
| 0,2 - 5 | Gew.-% | Dinitrosobenzol |
| 0,2 - 10 | Gew.-% | Säurefänger |
| 0,1 - 10 | Gew.-% | verstärkende Füllstoffe und |
| 70 - 90 | Gew.-% | organische Lösungsmittel. |

3. Bindemittel nach einem der Ansprüche 1 oder 2, dadurch gekennzeichnet, daß als metallbindendes Polymer bromiertes Poly-2,3-dichlorbutadien-1,3 gewünschtenfalls in Abmischung mit weiteren metallbindenden Polymeren enthalten ist.

4. Bindemittel nach einem der Ansprüche 1 bis 3, dadurch gekennzeichnet, daß außer bromierten Poly-2,3-dichlorbutadien-1,3 (bromiertes PDCB) weitere metallbindende Polymere, vorzugsweise halogenierte Polymere, wie chloriertes EPDM oder chlorsulfoniertes Polyethylen und insbesondere Chlorkautschuk vorhanden sind.

5. Bindemittel nach einem der Ansprüche 1 bis 4, dadurch gekennzeichnet, daß der Anteil des bromierten PDCB an der Gesamtmenge der metallbindenden Polymere 15 bis 35 Gew.-% beträgt.

6. Bindemittel nach einem der Ansprüche 1 bis 5, dadurch gekennzeichnt, daß die Menge an der Verbindung mit 2 oder mehr Resten der Formel $-CH_2Br$ 5 bis 25 Gew.-%, bezogen auf bromiertes PDCB, beträgt.

7. Bindemittel nach einem der Ansprüche 1 bis 6, dadurch gekennzeichnet, daß als aromatische Verbindung mit 2 oder mehr Resten $-CH_2Br$ in den Seitenketten bromierte Xylole eingesetzt werden.

8. Bindemittel nach einem der Ansprüche 1 bis 7, dadurch gekennzeichnet, daß als aromatische Verbindung mit 2 oder mehr Resten $-CH_2Br$ ein radikalisches Bromierungsprodukt von technischem Xylol mit im Mittel 2 Bromatomen pro Molekül Xylol eingesetzt wird.

9. Bindemittel nach einem der Ansprüche 1 bis 8, dadurch gekennzeichnet, daß als Säurefänger ein basisches Metallsalz, insbesondere Blei-Phosphit eingesetzt wird.

10. Bindemittel nach einem der Ansprüche 1 bis 9, dadurch gekennzeichnet, daß als Füllstoff Ruß eingesetzt wird.

11. Verwendung der Bindemittel nach einem der Ansprüche 1 bis 10 zum Aufvulkanisieren von Gummimischungen, insbesondere Naturkautschuk, Styrolbutadienkautschuk, Chlorkautschuk auf Metalle.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 155 488 (LORD CORP.)<br>* Anspruch 1 *<br>----- | | C 08 K 5/03<br>C 08 K 5/32<br>C 09 J 3/12 |

RECHERCHIERTE SACHGEBIETE (Int. Cl.4)

C 09 J
C 08 K

Der vorliegende Recherchenbericht wurde für alle Patentansprüche erstellt

| Recherchenort | Abschlußdatum der Recherche | Prüfer |
|---|---|---|
| DEN HAAG | 28-07-1989 | VAN HUMBEECK F.W.C. |